# EUROPÄISCHE PATENTANMELDUNG

(11) **EP 4 847 584 A1**
(43) Veröffentlichungstag der Anmeldung: **02.12.2026**
(21) Anmeldenummer: 25179128.1
(22) Anmeldetag: 27.05.2025
(51) Int. Cl.: C09K 23/42

(54) **DISPERSIONEN VON GLYCERINTRIBENZOAT MIT VERBESSERTER STABILITÄT**

(71) Anmelder: TRIGON CHEMIE GMBH, 36381 Schlüchtern (DE)
(72) Erfinder: Reinisch, Paul, 36381 Schlüchtern (DE)
(74) Vertreter: Fabry, Bernd

(57) **Zusammenfassung**

Vorgeschlagen werden wässrige Dispersionen enthaltend oder bestehend aus
(a) Glycerintribenzoat und
(b) mindestens einem Dispergator aus der Gruppe der alkoxylierten Fettalkohole oder alkoxylierten Fettsäuren.

## Beschreibung

### Gebiet der Erfindung

Die Erfindung befindet sich auf dem Gebiet der Kunststoffhilfsmittel und betrifft wässrige Dispersionen von Glycerintribenzoat mit verbesserter Stabilität.

### Technologischer Hintergrund

### Glycerintribenzoat (GTB)

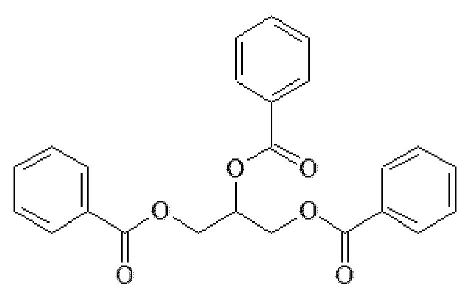

ist ein vielseitiger Hilfsstoff mit zahlreichen Anwendungen in den unterschiedlichsten Bereichen, wie beispielsweise Klebstoffen, Beschichtungen, Kunststoffen, Reinigungsmitteln, Pharmaprodukten, Kosmetika, Duftstoffen und Aromen, um nur einige Beispiele zu nennen.

Als umweltverträglicher Weichmacher für Papier, Pappe und Karton wird GBT schon seit den 40er Jahren für die Verpackung von Lebensmitteln verwendet. Große Mengen werden auch für die Herstellung von Klebstoffen auf Polyvinylacetatbasis benötigt. Dabei wird das Additiv unterhalb seines Schmelzpunktes mit einem Mischer mit hoher Scherkraft in die Mischung eingearbeitet. Wird das GTB dann über seinen Schmelzpunkt (71°C) erhitzt, führt dies zu einer irreversiblen Verklebung und Plastifizierung der Beschichtung. GTB kann auch in Cellophan-Verpackungen verwendet werden, um die Heißsiegeleigenschaften zu verbessern, ohne die Farbe und Klarheit der Folie zu beeinträchtigen. GBT ist ein ausgezeichneter Harzersatz in Nagellackformulierungen, denen er eine besondere Härte verleiht. Schließlich verbessert GBT auch die Haftung und Wasserbeständigkeit von Druckfarbenformulierungen.

Die wesentliche Verwendung für GBT bzw. GBT-Dispersionen ist der Einsatz als Weichmacher, Bindemittel, Reinigungsmittel, Stabilisator und Trägerstoff.

### Stand der Technik

WO 12139129 A1 (BOSTIC) offenbart einen Schmelzklebstoff, der aus einem metallocen-katalysierten Polyethylen, einem hydrierten Styrolblockcopolymer, einem Tackifier-Harz und Glycerintribenzoat als Weichmacher zusammengesetzt ist.

DE 10 2012 217659 A1 (BASF) betrifft expandierbare Polymerpartikel enthalten mindestens 50 Gewichtsprozent polymerisiertes Styrol und/oder alpha-Methylstyrol. Die Partikel sind dabei mit einem Beschichtungsmittel überzogen, das Glycerintribenzoat enthält.

CN107722504 A (HUBEI GUOYANG) betrifft Glycerintribenzoat als umweltfreundlichen Weichmacher für Fettsäuremethylester.

US4172824 A (EASTMAN KODAK) beschreibt, dass die Fließeigenschaften eines Copolyester-Schmelzklebstoffs, der aus Terephthalsäure, Adipinsäure, Ethylenglykol und 1,4-Butandiol hergestellt wird, durch die Zugabe von Glycerintribenzoat verbessert wird.

Aus US 2018 0257807 A1 (AVERY) ist beispielsweise ein Klebstoff für die Beschichtung von Haftetiketten bekannt, der aus einem Polymer, einer GTB-Dispersion und einem Tackifier besteht.

### Aufgabe der Erfindung

GTB ist ein Feststoff, der erst oberhalb von 70 °C schmilzt und in Wasser praktisch unlöslich ist. Wünschenswert wäre jedoch, GTB auch in Form von Dispersionen einzusetzen, da dies weitere Anwendungsmöglichkeiten eröffnen würde. Dem steht jedoch bislang entgegen, dass solche Dispersionen nach dem Stand der Technik erhebliche Mengen an Dispergator enthalten müssen, um zu verhindern, dass sich das Benzoat auf dem Boden abscheidet. Weitere Stabilitätsprobleme bestehen in einem unerwünschten Anstieg der Viskosität und der Bildung von Agglomeraten.

Trotz zahlreicher Bemühungen ist es bisher nicht gelungen, Dispergatoren zu finden, die Dispersionen mit rund 30 bis 45 Gew.-% GTB-Gehalt über einen ausreichenden Lagerzeitraum stabil halten, insbesondere dann nicht, wenn die Lagerung auch noch bei niedrigen Temperaturen erfolgt.

Die Aufgabe der vorliegenden Erfindung hat daher darin bestanden, geeignete Dispergatoren zur Verfügung zu stellen, die denen des Stands der Technik überlegen sind und die Stabilität von GTB-Dispersionen gegenüber Produkten des Marktes verbessern. Zusätzlich sollten die Dispergatoren - ebenso wie das GTB - umweltfreundlich und insbesondere nicht kennzeichnungspflichtig sein.

### Beschreibung der Erfindung

Ein erster Gegenstand der Erfindung betrifft wässrige Dispersionen enthaltend oder bestehend aus
(a) Glycerintribenzoat und
(b) mindestens einem Dispergator der Formel (I) und/oder (II)

   R¹O(EO)ₙ₁(PO)ₘ(EO)ₙ₂R³ (I)

   R²CO(EO)ₙ₁(PO)ₘ(EO)ₙ₂R³ (II)

   wobei
   R¹ für einen linearen oder verzweigten, gesättigten oder ungesättigten, gegebenenfalls hydroxysubstituierten Kohlenwasserstoffrest mit 6 bis 22 Kohlenstoffatomen steht, sowie n1, n2 und m unabhängig voneinander 0 oder ganze Zahlen von 1 bis 50 steht;
   R²CO für einen linearen oder verzweigten, gesättigten oder ungesättigten, gegebenenfalls hydroxysubstituierten Acylrest mit 5 bis 21 Kohlenstoffatomen steht; n1, n2 und m unabhängig voneinander 0 oder ganze Zahlen von 1 bis 50 steht;
   R³ für Wasserstoff oder einen Alkylrest mit 1 bis 4 Kohlenstoffatomen steht;
   mit der Maßgabe, dass n1 und n2 nicht gleichzeitig für 0 stehen können.

Überraschenderweise wurde gefunden, dass mit der erfindungsgemäßen Auswahl an Dispergatoren nun wässrige Dispersionen mit einem GTB-Gehalt um 30 Gew.-% erhältlich sind, die auch bei längerer Lagerung bei tiefen Temperaturen weder separieren, noch einen Viskositätsanstieg oder die Bildung von Agglomeraten zeigen. Die neuen Dispersionen sind zudem großtechnisch leicht herstellbar. Ein weiterer Vorteil besteht darin, dass die einzusetzenden Dispergatoren nicht kennzeichnungspflichtig sind, was insbesondere für den Einsatz in der Kosmetik wichtig ist.

### Glycerintribenzoat

Glycerintribenzoat ist ein seit Jahrzehnten bekannter Weichmacher und Kunststoffzusatzstoff, der als weiße bis gelbliche Pellets oder Flocken, im Markt erhältlich ist. Vorzugsweise werden Produkte eingesetzt, bei denen die Glycerinkomponente aus nachhaltigen Quellen stammt. Der Stoff kann beispielsweise von der Trigon Chemie GmbH bezogen werden.

### Dispergatoren

Die Dispergatoren, die erfindungsgemäß eingesetzt werden, stellen ihrer Natur nach alkoxylierte Fettalkohole (Formel I; R³ = H) bzw. alkoxylierte Fettsäuren (Formel II; R³ = H) dar.

Typische Beispiele für **Fettalkoholalkoxylate** (synonym: Fettalkoholpolyglycolether) der Formel (I) umfassen Anlagerungsprodukte von mindestens einem und durchschnittlich 1 bis 50, vorzugsweise 2 bis 10 molaren Einheiten Ethylenoxid (EO) und gegebenenfalls 1 bis 50 molaren Einheiten Propylenoxid (PO), in Random- oder Blockverteilung, an gesättigte oder ungesättigte Fettalkohole mit 6 bis 22 Kohlenstoffatomen, als da sind: Capronalkohol, Caprylalkohol, Caprinalkohol, Undecylalkohol, Laurylalkohol, Myristylalkohol, Cetylalkohol, Palmoleylalkohol, Stearylalkohol, Isostearylalkohol, Ricinylalkohol, Oleylalkohol, Linolylalkohol, Linolenylalkohol, Elaidylalkohol, Arachidylalkohol, Gadoleylalkohol, Erucylalkohol, Behenylalkohol sowie technische Gemische wie Kokosfettalkohol, Palmfettalkohol und dergleichen.

In einer ersten bevorzugten Ausführungsform folgen die Dispergatoren der Formel (I) in der
- R¹ für einen Alkylrest mit 10 bis 14 Kohlenstoffatomen
- R³ für Wasserstoff; und/oder
- n1 für eine ganze Zahl von 1 bis 10 sowie m und n2 jeweils für 0; und/oder
- n1 für eine ganze Zahl von 1 bis 10, p für eine ganze Zahl von 1 bis 3 und n2 für 0 steht. Ganz besonders bevorzugt sind Laurylalkohol und/oder Myristylalkohol mit 2 bis 5 molaren Einheiten Ethylenoxid.
Typische Beispiele für **Fettsäurealkoxylate** der Formel (II) umfassen Anlagerungsprodukte von mindestens einem und durchschnittlich 1 bis 50, vorzugsweise 2 bis 10 molaren Einheiten Ethylenoxid (EO) und gegebenenfalls 1 bis 50 molaren Einheiten Propylenoxid (PO), in Random- oder Blockverteilung, an gesättigte oder ungesättigte Fettsäuren mit 6 bis 22 Kohlenstoffatomen als da sind: Capronsäure, Caprylsäure, Caprinsäure, Undecansäure, Laurinsäure, Myristinsäure, Palmitinsäure, Palmoleinsäure, Stearinsäure, Isostearinsäure, Rizinolsäure, Ölsäure, Linolsäure, Linolensäure, Elaidinsäure, Arachidonsäure, Gadoleinsäure, Erucasäure, Behensäure sowie technische Gemische wie Kokosfettsäure, Palmfettsäure oder Palmkernfettsäure und dergleichen.

In einer zweiten bevorzugten Ausführungsform folgen die Dispergatoren der Formel (II) in der
- R²CO für einen Acylrest mit 9 bis 13 Kohlenstoffatomen und/oder
- R³ für Wasserstoff; und/oder
- n1 für eine ganze Zahl von 1 bis 10 sowie m und n2 jeweils für 0; und/oder
- n1 für eine ganze Zahl von 1 bis 10, p für eine ganze Zahl von 1 bis 3 und n2 für 0 steht. Ganz besonders bevorzugt sind Laurinsäure und/oder Myristinsäure mit 2 bis 5 molaren Einheiten Ethylenoxid.

Weiterhin bevorzugt sind Dispersionen, die sich dadurch auszeichnen, dass sie
- Dispergatoren der Formel (I) enthalten, in der R¹ für einen Alkylrest mit 12 bis 14 Kohlenstoffatomen, n1 für ganze Zahlen von 2 bis 5, n2 und p für 0 stehen, und/oder
- Dispergatoren der Formel (II) enthalten, in der R²CO für einen Acylrest mit 11 bis 13 Kohlenstoffatomen, n1 für ganze Zahlen von 2 bis 5, n2 und p für 0 stehen.

In Summe bevorzugt sind Dispergatoren, bei denen in Formel (I) und/oder (II) beide Reste R³ für Wasserstoff stehen. Sind die Reste R3 von Wasserstoff verschieden, liegen im Fall von Formel (I) sogenannte Mischether, im Fall von Formel (II) so genannte Mischetherester vor.

GTB-Dispersionen mit besonders vorteilhaften Eigenschaften zeichnen sich dadurch aus, dass sie entweder zwei Dispergatoren der Formel (I), zwei Dispergatoren der Formel (II) oder einen Dispergator der Formel (I) und einen der Formel (II) enthalten.

### Dispersionen

In einer ersten bevorzugten Ausführungsform können die erfindungsgemäßen Dispersionen enthalten:
(a) etwa 20 bis etwa 45 Gew.-% Glycerintribenzoat und
(b) etwa 5 bis etwa 18 Gew.-% mindestens einen Dispergator,
mit der Maßgabe, dass sich die Mengenangaben mit Wasser zu 100 Gew.-% ergänzen.

In einer zweiten besonders bevorzugten Ausführungsform können sie enthalten
(a) etwa 25 bis etwa 40 Gew.-% Glycerintribenzoat und
(b) etwa 10 bis etwa 18 Gew.-% mindestens einen Dispergator,
mit der Maßgabe, dass sich die Mengenangaben mit Wasser zu 100 Gew.-% ergänzen.

In einer dritten besonders bevorzugten Ausführungsform können sie enthalten
(a) etwa 20 bis etwa 30 Gew.-% Glycerintribenzoat und
(b) etwa 12 bis etwa 16 Gew.-% mindestens einen Dispergator,
mit der Maßgabe, dass sich die Mengenangaben mit Wasser zu 100 Gew.-% ergänzen.

### Herstellverfahren

Ein weiterer Gegenstand der Erfindung betrifft ein Verfahren zur Herstellung der erfindungsgemäßen wässrigen Dispersionen, bei dem man die Komponenten zunächst innig unter Erhalt einer Vordispersion vermischt und diese dann anschließend in einer Kugel- oder Walzenmühle zur Enddispersion vermahlt.

### Gewerbliche Anwendbarkeit

Ein weiterer Gegenstand der Erfindung betrifft ein Verfahren zur Herstellung von wässrigen Dispersionen von Glycerintribenzoat mit verbesserter Stabilität, umfassend die Schritte:
(i) Bereitstellen einer wässrigen Glycerintribenzoat-Zubereitung;
(ii) Bereitstellen von mindestens einem Alkoxylat der Formel (I) und/oder (III)

   R¹O(EO)ₙ₁(PO)ₘ(EO)ₙ₂R³ (I)

   R²CO(EO)ₙ₁(PO)ₘ(EO)ₙ₂R³ (II)

   wobei
   R¹ für einen linearen oder verzweigten, gesättigten oder ungesättigten, gegebenenfalls hydroxysubstituierten Kohlenwasserstoffrest mit 6 bis 22 Kohlenstoffatomen steht;
   R²CO für einen linearen oder verzweigten, gesättigten oder ungesättigten, gegebenenfalls hydroxysubstituierten Acylrest mit 5 bis 21 Kohlenstoffatomen steht;
   R³ für Wasserstoff oder einen Alkylrest mit 1 bis 4 Kohlenstoffatomen steht;
   n1, n2 und m unabhängig voneinander 0 oder ganze Zahlen von 1 bis 50 bedeuten;
      mit der Maßgabe, dass n1 und n2 nicht gleichzeitig für 0 stehen können,
(iii) Vermischen der Komponenten (i) und (ii) unter Bildung einer Vordispersion, sowie
(iv) Vermahlen der Vordispersion zu einer Enddispersion.

Ebenfalls beansprucht wird die Verwendung von Alkoxylaten der Formel (I) und/oder (II)

R¹O(EO)ₙ₁(PO)ₘ(EO)ₙ₂R³ (I)

R²CO(EO)ₙ₁(PO)ₘ(EO)ₙ₂R³ (II)

wobei
R¹ für einen linearen oder verzweigten, gesättigten oder ungesättigten, gegebenenfalls hydroxysubstituierten Kohlenwasserstoffrest mit 6 bis 22 Kohlenstoffatomen steht;
R²CO für einen linearen oder verzweigten, gesättigten oder ungesättigten, gegebenenfalls hydroxysubstituierten Acylrest mit 5 bis 21 Kohlenstoffatomen steht;
R³ für Wasserstoff oder einen Alkylrest mit 1 bis 4 Kohlenstoffatomen steht;
n1, n2 und m unabhängig voneinander 0 oder ganze Zahlen von 1 bis 50 bedeuten;
mit der Maßgabe, dass n1 und n2 nicht gleichzeitig für 0 stehen können,
als Dispergatoren für die Herstellung von wässrigen Glycerintribenzoat-Dispersionen.

Schließlich wird auch die Verwendung von wässrigen Glycerintribenzoat-Dispersionen nach der vorliegenden Erfindung als Weichmacher, Bindemittel, Reinigungsmittel, Stabilisator (z.B. Für Fettstoffe, wie Fettsäureester), Kosmetikzusatzstoff (speziell für Nagellacke) und Trägerstoff (beispielsweise zur Beladung mit Duftstoffen oder als Hüllmaterial bei der Herstellung von Kapseln) beansprucht.

Es sei der guten Ordnung halber darauf hingewiesen, dass alle vorstehende genannten bevorzugten Ausführungsformen, beispielsweise die Auswahlen bezüglich der Dispergatoren, deren Mischungen und deren Einsatzmengen auch für deren gewerbliche Anwendbarkeit zutreffen und eine Wiederholung daher nicht erforderlich ist.

### BEISPIELE

### Beispiele 1 bis 34, Vergleichsbeispiele V1 bis V15

Glycerintribenzoat, Wasser und Dispergator wurden mit Hilfe eines Inlinemischers vordispergiert und die Vordispersion anschließend in einer Kugelmühle zur endgültigen Dispersion vermahlen. Die Dispersionen wurden bei 15 °C über einen Zeitraum von 2 Wochen gelagert und dabei Separation, Viskositätszunahme und Agglomeratbildung auf einer Skala von (0) = nicht zu beobachten bis (3) = sehr deutlich visuell beurteilt. Die Ergebnisse sind in der nachfolgenden **Tabellen 1 bis 5** zusammengefasst.

**Tabelle 1**

| Einfluss des Dispergators bei 30 Gew.-%igen GTB-Dispersionen mit 5 Gew.-% Dispergator | | | | | | | | | | |
|---|---|---|---|---|---|---|---|---|---|---|
| **Zusammensetzung** | **1** | **2** | **3** | **4** | **5** | **V1** | **V2** | **V3** | **V4** | **V5** |
| Glycerintribenzoat | 30 | 30 | 30 | 30 | 30 | 30 | 30 | 30 | 30 | 30 |
| Laurylalkohol+3EO | 5 | - | - | - | - | - | - | - | - | - |
| Myristylalkohol+5EO | - | 5 | - | - | - | - | - | - | - | - |
| Laurinsäure+3EO | - | - | 5 | - | - | - | - | - | - | - |
| Myristinsäure+5EP | - | - | - | 5 | - | - | - | - | - | - |
| Laurinsäure+2PO+3EO | - | - | - | - | 5 | - | - | - | - | - |
| Laurinsäuremonoglycerid | - | - | - | - | - | 5 | - | - | - | - |
| Polyglycerinpolyricinoleat | - | - | - | - | - | - | 5 | - | - | - |
| Sorbitanmonooleat | - | - | - | - | - | - | - | 5 | - | - |
| Sorbitandistearat+2EO | - | - | - | - | - | - | - | - | 5 | - |
| Kokosalkylpolyglucosid | - | - | - | - | - | - | - | - | - | 5 |
| Wasser | Ad 100 | | | | | | | | | |
| ***Separation*** | 2 | 2 | 2 | 2 | 2 | 3 | 3 | 3 | 3 | 3 |
| ***Viskositätsanstieg*** | 1 | 1 | 1 | 1 | 1 | 2 | 2 | 2 | 3 | 3 |
| ***Agglomeratbildung*** | 1 | 1 | 1 | 1 | 1 | 2 | 3 | 2 | 3 | 3 |

Bei 30 Gew.-%igen GTB-Dispersionen reicht eine Dispergatormenge von 5 Gew.-% nicht aus, um durchgehend stabile Dispersionen herzustellen. Die erfindungsgemäßen Dispergatoren schneiden dennoch am besten ab.

**Tabelle 2**

| Einfluss des Dispergators bei 30 Gew.-%igen GTB-Dispersionen mit 15 Gew.-% Dispergator | | | | | | | | | | |
|---|---|---|---|---|---|---|---|---|---|---|
| **Zusammensetzung** | **6** | **7** | **8** | **9** | **10** | **V6** | **V7** | **V8** | **V9** | **V10** |
| Glycerintribenzoat | 30 | 30 | 30 | 30 | 30 | 30 | 30 | 30 | 30 | 30 |
| Laurylalkohol+3EO | 15 | - | - | - | - | - | - | - | - | - |
| Myristylalkohol+5EO | - | 15 | - | - | - | - | - | - | - | - |
| Laurinsäure+3EO | - | - | 15 | - | - | - | - | - | - | - |
| Myristinsäure+5EP | - | - | - | 15 | - | - | - | - | - | - |
| Laurinsäure+2PO+3EO | - | - | - | - | 15 | - | - | - | - | - |
| Laurinsäuremonoglycerid | - | - | - | - | - | 15 | - | - | - | - |
| Polyglycerinpolyricinoleat | - | - | - | - | - | - | 15 | - | - | - |
| Sorbitanmonooleat | - | - | - | - | - | - | - | 15 | - | - |
| Sorbitandistearat+2EO | - | - | - | - | - | - | - | - | 15 | - |
| Kokosalkylpolyglucosid | - | - | - | - | - | - | - | - | | 15 |
| Wasser | Ad 100 | | | | | | | | | |
| ***Separation*** | 0 | 1 | 0 | 0 | 1 | 1 | 2 | 2 | 2 | 2 |
| ***Viskositätsanstieg*** | 0 | 1 | 0 | 0 | 1 | 1 | 1 | 2 | 3 | 3 |
| ***Agglomeratbildung*** | 0 | 0 | 0 | 0 | 0 | 1 | 1 | 1 | 1 | 1 |

Bei 30 Gew.-%igen GTB-Dispersionen, die 15 Gew.-% Dispergator enthalten, werden mit den erfindungsgemäßen Dispergatoren höhere Stabilitäten sowohl bezüglich Separierung, Viskositätsanstieg als auch Agglomeratbildung erzielt, als mit anderen nichtionischen Dispergatoren des Marktes. Besonders vorteilhaft sind Fettsäurealkoxylate mit niedrigem EO-Gehalt.

**Tabelle 3**

| Einfluss des Dispergators bei 40 Gew.-%igen GTB-Dispersionen mit 15 Gew.-% Dispergator | | | | | | | | | | |
|---|---|---|---|---|---|---|---|---|---|---|
| **Zusammensetzung** | **11** | **12** | **13** | **14** | **15** | **V11** | **V12** | **V13** | **V14** | **V15** |
| Glycerintribenzoat | 40 | 40 | 40 | 40 | 40 | 40 | 40 | 40 | 40 | 40 |
| Laurylalkohol+3EO | 15 | - | - | - | - | - | - | - | - | - |
| Myristylalkohol+5EO | - | 15 | - | - | - | - | - | - | - | - |
| Laurinsäure+3EO | - | - | 15 | - | - | - | - | - | - | - |
| Myristinsäure+5EP | - | - | - | 15 | - | - | - | - | - | - |
| Laurinsäure+2PO+3EO | - | - | - | - | 15 | - | - | - | - | - |
| Laurinsäuremonoglycerid | - | - | - | - | - | 15 | - | - | - | - |
| Polyglycerinpolyricinoleat | - | - | - | - | - | - | 15 | - | - | - |
| Sorbitanmonooleat | - | - | - | - | - | - | - | 15 | - | - |
| Sorbitandistearat+2EO | - | - | - | - | - | - | - | - | 15 | - |
| Kokosalkylpolyglucosid | - | - | - | - | - | - | - | - | - | 15 |
| Wasser | Ad 100 | | | | | | | | | |
| ***Separation*** | 1 | 1 | 1 | 1 | 1 | 3 | 3 | 3 | 3 | 3 |
| ***Viskositätsanstieg*** | 1 | 1 | 1 | 1 | 1 | 2 | 2 | 2 | 3 | 3 |
| ***Agglomeratbildung*** | 1 | 1 | 1 | 1 | 1 | 2 | 2 | 2 | 2 | 3 |

Bei 40 Gew.-%igen GTB-Dispersionen, die 15 Gew.-% Dispergator enthalten, zeigen die erfindungsgemäßen Dispergatoren noch zufriedenstellende Leistungen, was Separierung, Viskositätsanstieg als auch Agglomeratbildung betrifft. Die anderen nichtionischen Dispergatoren des Marktes sind hingegen ungenügend.

**Tabelle 4**

| Einfluss der Dispergatormenge bei 35 Gew.-%igen GTB-Dispersionen | | | | | | | | | | |
|---|---|---|---|---|---|---|---|---|---|---|
| **Zusammensetzung** | **16** | **17** | **18** | **19** | **20** | **21** | **22** | **23** | **24** | **25** |
| Glycerintribenzoat | 35 | | | | | | | | | |
| Laurylalkohol+3EO | 5 | 10 | 15 | 20 | 25 | - | - | - | - | - |
| Laurinsäure+3EO | - | - | - | - | - | 5 | 10 | 15 | 20 | 25 |
| Wasser | Ad 100 | | | | | | | | | |
| ***Separation*** | 1 | 0 | 0 | 0 | 0 | 1 | 0 | 0 | 0 | 0 |
| ***Viskositätsanstieg*** | 1 | 1 | 1 | 0 | 1 | 1 | 1 | 0 | 0 | 1 |
| ***Agglomeratbildung*** | 1 | 1 | 1 | 0 | 1 | 1 | 1 | 0 | 0 | 1 |

Die optimale Einsatzmenge an Dispergator liegt bei einer handelsüblichen 35 Gew.-%igen GTB-Dispersion bei etwa 10 bis etwa 20 Gew.-%

**Tabelle 5**

| Einfluss der Dispergatormischung bei 35 Gew.-%igen GTB-Dispersionen | | | | | | | | | |
|---|---|---|---|---|---|---|---|---|---|
| **Zusammensetzung** | **26** | **27** | **28** | **29** | **30** | **31** | **32** | **33** | **34** |
| Glycerintribenzoat | 35 | | | | | | | | |
| Laurylalkohol+3EO | 10 | 15 | 20 | - | - | - | - | - | - |
| Laurinsäure+3EO | - | - | - | 10 | 15 | 20 | - | - | - |
| Laurylalkohol+3EO + Laurinsäure+3EO (1:1 | - | - | - | - | - | - | 10 | 15 | 20 |
| Wasser | Ad 100 | | | | | | | | |
| ***Separation*** | 0 | 0 | 0 | 0 | 0 | 0 | 0 | 0 | 0 |
| ***Viskositätsanstieg*** | 1 | 1 | 0 | 1 | 0 | 1 | 0 | 0 | 0 |
| ***Agglomeratbildung*** | 1 | 1 | 0 | 1 | 0 | 1 | 0 | 0 | 0 |

Die bereits sehr guten Ergebnisse für die erfindungsgemäß einzusetzenden Dispergatoren lassen sich tendenziell noch einmal verbessern, wenn man Mischungen von zwei Dispergatoren einsetzt.

## Patentansprüche

1. Wässrige Dispersionen enthaltend oder bestehend aus
(a) Glycerintribenzoat und
(b) mindestens einem Dispergator der Formel (I) und/oder (III)
R¹O(EO)ₙ₁(PO)ₘ(EO)ₙ₂R³ (I)
R²CO(EO)ₙ₁(PO)ₘ(EO)ₙ₂R³ (II)
wobei
R¹ für einen linearen oder verzweigten, gesättigten oder ungesättigten, gegebenenfalls hydroxysubstituierten Kohlenwasserstoffrest mit 6 bis 22 Kohlenstoffatomen steht, sowie n1, n2 und m unabhängig voneinander 0 oder ganze Zahlen von 1 bis 50 steht;
R²CO für einen linearen oder verzweigten, gesättigten oder ungesättigten, gegebenenfalls hydroxysubstituierten Acylrest mit 5 bis 21 Kohlenstoffatomen steht;
R³ für Wasserstoff oder einen Alkylrest mit 1 bis 4 Kohlenstoffatomen steht;
n1, n2 und m unabhängig voneinander 0 oder ganze Zahlen von 1 bis 50 bedeuten;
mit der Maßgabe, dass n1 und n2 nicht gleichzeitig für 0 stehen können.

2. Dispersionen nach Anspruch 1, **dadurch gekennzeichnet, dass** sie Dispergatoren der Formel (I) enthalten, in der R¹ für einen Alkylrest mit 10 bis 14 Kohlenstoffatomen steht.

3. Dispersionen nach den Ansprüchen 1 und/oder 2, **dadurch gekennzeichnet, dass** sie Dispergatoren der Formel (I) enthalten, in denen n1 für eine ganze Zahl von 1 bis 10 sowie m und n2 jeweils für 0 stehen.

4. Dispersionen nach den Ansprüchen 1 und/oder 2, **dadurch gekennzeichnet, dass** sie Dispergatoren der Formel (I) enthalten, in denen n1 für eine ganze Zahl von 1 bis 10, p für eine ganze Zahl von 1 bis 3 und n2 für 0 steht.

5. Dispersionen nach mindestens einem der Ansprüche 1 bis 4, **dadurch gekennzeichnet, dass** sie Dispergatoren der Formel (II) enthalten, in der R²CO für einen Alkylrest mit 9 bis 13 Kohlenstoffatomen steht.

6. Dispersionen nach mindestens einem der Ansprüche 1 bis 5, **dadurch gekennzeichnet, dass** sie Dispergatoren der Formel (II) enthalten, in denen n1 für eine ganze Zahl von 1 bis 10 sowie m und n2 jeweils für 0 stehen.

7. Dispersionen nach mindestens einem der Ansprüche 1 bis 5, **dadurch gekennzeichnet, dass** sie Dispergatoren der Formel (II) enthalten, in denen n1 für eine ganze Zahl von 1 bis 10, p für eine ganze Zahl von 1 bis 3 und n2 für 0 steht.

8. Dispersionen nach mindestens einem der Ansprüche 1 bis 7, **dadurch gekennzeichnet, dass** sie
- Dispergatoren der Formel (I) enthalten, in der R¹ für einen Alkylrest mit 12 bis 14 Kohlenstoffatomen, R³ für Wasserstoff, n1 für ganze Zahlen von 2 bis 5, n2 und p für 0 stehen, und/oder
- Dispergatoren der Formel (II) enthalten, in der R²CO für einen Acylrest mit 11 bis 13 Kohlenstoffatomen, R³ für Wasserstoff, n1 für ganze Zahlen von 2 bis 5, n2 und p für 0 stehen.

9. Dispersionen nach mindestens einem der Ansprüche 1 bis 8, **dadurch gekennzeichnet, dass** sie Dispergatoren der Formel (I) und/oder (II) enthalten in denen beide Reste R³ für Wasserstoff stehen.

10. Dispersionen nach mindestens einem der Ansprüche 1 bis 9, **dadurch gekennzeichnet, dass** sie enthalten
(a) etwa 20 bis etwa 45 Gew.-% Glycerintribenzoat und
(b) etwa 5 bis etwa 20 Gew.-% mindestens einen Dispergator,
mit der Maßgabe, dass sich die Mengenangaben mit Wasser zu 100 Gew.-% ergänzen.

11. Dispersionen nach mindestens einem der Ansprüche 1 bis 10, **dadurch gekennzeichnet, dass** sie enthalten
(a) etwa 25 bis etwa 40 Gew.-% Glycerintribenzoat und
(b) etwa 10 bis etwa 18 Gew.-% mindestens einen Dispergator,
mit der Maßgabe, dass sich die Mengenangaben mit Wasser zu 100 Gew.-% ergänzen.

12. Verfahren zur Herstellung von wässrigen Dispersionen nach Anspruch 1, **dadurch gekennzeichnet, dass** man die Komponenten zunächst innig unter Erhalt einer Vordispersion vermischt und diese dann anschließend in einer Kugel- oder Walzenmühle zur Enddispersion vermahlt.

13. Verfahren zur Herstellung von wässrigen Dispersionen von Glycerintribenzoat mit verbesserter Stabilität, umfassend die Schritte:
(i) Bereitstellen einer wässrigen Glycerintribenzoat-Zubereitung;
(ii) Bereitstellen von mindestens einem Alkoxylat der Formel (I) und/oder (III)
R¹O(EO)ₙ₁(PO)ₘ(EO)ₙ₂R³ (I)
R²CO(EO)ₙ₁(PO)ₘ(EO)ₙ₂R³ (II)
wobei
R¹ für einen linearen oder verzweigten, gesättigten oder ungesättigten, gegebenenfalls hydroxysubstituierten Kohlenwasserstoffrest mit 6 bis 22 Kohlenstoffatomen steht;
R²CO für einen linearen oder verzweigten, gesättigten oder ungesättigten, gegebenenfalls hydroxysubstituierten Acylrest mit 5 bis 21 Kohlenstoffatomen steht;
R³ für Wasserstoff oder einen Alkylrest mit 1 bis 4 Kohlenstoffatomen steht;
n1, n2 und m unabhängig voneinander 0 oder ganze Zahlen von 1 bis 50 bedeuten;
mit der Maßgabe, dass n1 und n2 nicht gleichzeitig für 0 stehen können,
(iii) Vermischen der Komponenten (i) und (ii) unter Bildung einer Vordispersion, sowie
(iv) Vermahlen der Vordispersion zu einer Enddispersion.

14. Verwendung von Alkoxylaten der Formel (I) und/oder (III)
R¹O(EO)ₙ₁(PO)ₘ(EO)ₙ₂R³ (I)
R²CO(EO)ₙ₁(PO)ₘ(EO)ₙ₂R³ (II)
wobei
R¹ für einen linearen oder verzweigten, gesättigten oder ungesättigten, gegebenenfalls hydroxysubstituierten Kohlenwasserstoffrest mit 6 bis 22 Kohlenstoffatomen steht;
R²CO für einen linearen oder verzweigten, gesättigten oder ungesättigten, gegebenenfalls hydroxysubstituierten Acylrest mit 5 bis 21 Kohlenstoffatomen steht;
R³ für Wasserstoff oder einen Alkylrest mit 1 bis 4 Kohlenstoffatomen steht;
n1, n2 und m unabhängig voneinander 0 oder ganze Zahlen von 1 bis 50 bedeuten;
mit der Maßgabe, dass n1 und n2 nicht gleichzeitig für 0 stehen können,
als Dispergatoren für die Herstellung von wässrigen Glycerintribenzoat-Dispersionen.

15. Verwendung von wässrigen Glycerintribenzoat-Dispersionen nach Anspruch 1 als Weichmacher, Bindemittel, Reinigungsmittel, Stabilisator, Kosmetikzusatzstoff, speziell für Nagellacke und Trägerstoff.
